# FASCICULE DE BREVET EUROPEEN

(11) **EP 0 743 728 B1**
(45) Date de publication et mention de la délivrance du brevet: **06.02.2002**
(21) Numéro de dépôt: 96410039.0
(22) Date de dépôt: 02.05.1996
(51) Int. Cl.: H02B 1/32, H02B 1/42

(54) **Coffret d'appareillage électrique**
Gehäuse eines elektrischen Gerätes
Cabinet for electrical apparatus

(30) Priorité: 17.05.1995 FR 9506072
(43) Date de publication de la demande: 20.11.1996
(73) Titulaire: Schneider Electric Industries SA, 92500 Rueil-Malmaison (FR)
(72) Inventeur: Balaud, Philippe, 38050 Grenoble Cedex 09 (FR); Dalla Costa, Thierry, 38050 Grenoble Cedex 09 (FR); Bourbon, Manuel, 38050 Grenoble Cedex 09 (FR); Martinotti, Patrice, 38050 Grenoble Cedex 09 (FR)
(74) Mandataire: Jouvray, Marie-Andrée

(56) Documents cités:
- EP-A- 0 017 124
- DE-A- 1 440 816
- DE-U- 1 994 427
- NL-A- 8 802 976

## Description

L'invention concerne un coffret d'appareillage électrique comportant un fond, au moins un support en forme de rail pour recevoir de l'appareillage électrique, et des moyens de maintien du support dans le fond du coffret.

Les coffrets d'appareillage connus comportent un fond et des parois sur lesquels sont fixés un ou plusieurs supports. Les supports sont généralement des rails symétriques maintenus au fond ou sur les parois par des vis de fixation. Des appareils électriques modulaires sont fixés sur les rails par des dispositifs de fixation amovibles.

Les supports doivent pouvoir être réglés horizontalement dans les coffrets pour assurer un bon alignement des faces avants desdits coffrets. Il est connu d'utiliser des dispositifs de fixation à positions variables pour maintenir les supports.

Ces fixations sont généralement rigides et ne permettent pas un alignement rapide des supports.

Un exemple de fixation rigide est décrit dans le document DE-A-1 440 816 où un support en forme de rail est fixé dans le fond d'un boîtier par trois rivets alignés.

Pour certaines installations, des appareils électriques sont installés et câblés sur le support, avant que le support soit lui-même fixé dans le coffret. Dans ce cas la mise en place et la fixation du support ne se fait pas aisément, particulièrement lorsque le support est muni d'un nombre important d'appareils.

L'invention a pour but un coffret d'appareillage électrique permettant une fixation rapide et aisée des supports d'appareillage électrique.

Selon l'invention, ce but est atteint par le fait que les moyens de maintien comportent :
- des premiers moyens de fixation situés sur le fond sensiblement vers une première extrémité du support pour immobiliser le support dans toutes les directions,
- des seconds moyens de fixation situés sur le fond sensiblement vers une seconde extrémité du support opposée à la première, lesdits seconds moyens enrobant une partie inférieure et une partie supérieure dudit support pour bloquer les déplacements perpendiculaires du support par rapport au fond et permettre à la dite seconde extrémité de glisser, et
- des troisièmes moyens de fixation solidaires du fond et comportant une partie de section étroite destinée à pénétrer dans le support, lesdits troisièmes moyens étant situés entre les premiers et des seconds moyens de fixation pour bloquer les mouvements en translation du support par rapport au fond et permettant des mouvements en rotation autour d'un axe perpendiculaire audit fond.

Dans un mode particulier de réalisation les premiers moyens de fixation comportent une partie rehaussée solidaire du fond destinée à recevoir une vis de fixation.

Selon un mode préférentiel de réalisation les troisièmes moyens de fixation sont solidaires du fond et ont une forme ayant une première partie de section large entre le fond et le support et une seconde partie de section étroite pénétrant dans le support. Les troisièmes moyens de fixation sont situés à une distance sensiblement médiane entre les premiers et les seconds moyens de fixation.

De préférence, les seconds moyens de fixation sont solidaires du fond et ont une forme de glissière enrobant une partie inférieure et une partie supérieure du support, la partie inférieure étant dirigée vers le fond du coffret et la partie supérieure dirigée vers la face avant du coffret.

Le support comporte au moins à une extrémité un perçage oblong perpendiculaire au fond du coffret et à une partie centrale un perçage circulaire pour coopérer avec les troisièmes moyens de fixation. Le support est de préférence un rail symétrique.

D'autres avantages ressortiront plus clairement de la description qui va suivre, de modes particuliers de réalisation de l'invention, donnés à titre d'exemples non limitatifs, et représentés aux dessins annexés sur lesquels :

La figure 1 montre un mode de réalisation d'un coffret selon l'invention.

La figure 2 montre un support pouvant être installé dans un coffret selon la figure 1.

La figure 3 montre un coffret selon la figure 1 muni d'un support selon la figure 2.

Les figures 4 et 5 montrent des vues de face d'un coffret selon la figure 1 avec un support mis dans deux positions différentes.

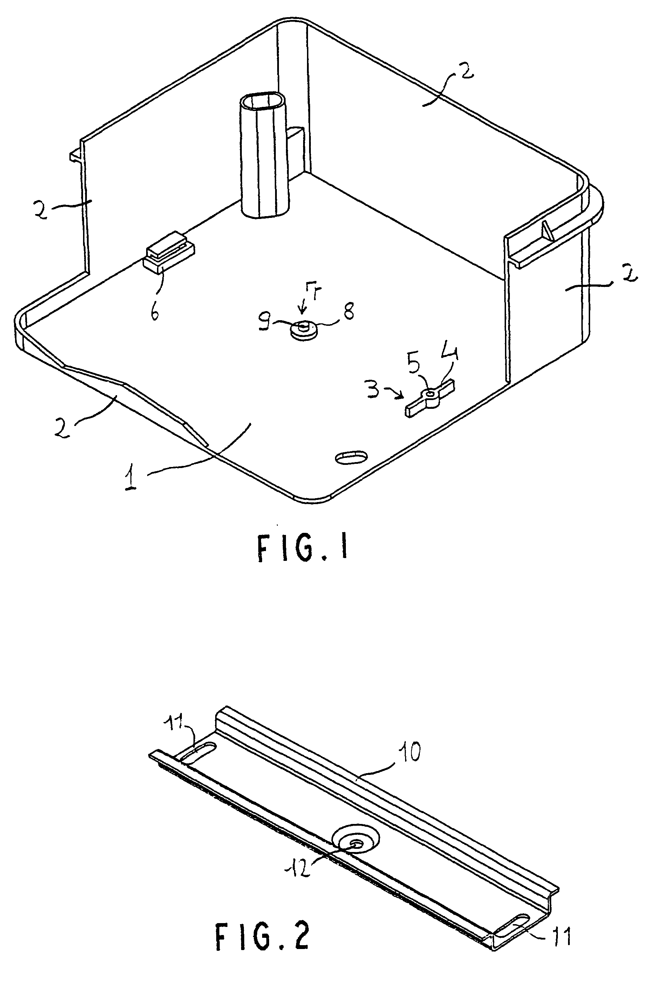

Un coffret selon un mode de réalisation de l'invention est représenté sur la figure 1. Le coffret comporte un fond 1 et des parois 2. Sur le fond à proximité d'une première paroi, un premier dispositif de fixation 3 comporte une partie rehaussée 4 et un orifice 5 destiné à recevoir une vis de fixation. Un second dispositif de fixation 6, disposé sur le fond à proximité d'une seconde paroi opposée à la première, a une forme de glissière. Entre les premier et second dispositifs de fixation, un troisième dispositif de fixation 7 est disposé sur le fond du coffret. Le troisième dispositif de fixation comporte une embase 8 de section large et un pion 9 de forme circulaire de section étroite.

La figure 2 montre un support 10 en forme de rail symétrique destiné à être maintenu dans le coffret par les trois dispositifs de fixation 3, 6 et 7. Le support 10 comporte vers ses extrémités au moins un perçage 11 oblong et dans sa partie centrale, médiane par rapport aux extrémités, un perçage circulaire. La partie centrale peut-être emboutie et se trouver sur un plan différent du plan des perçages oblongs.

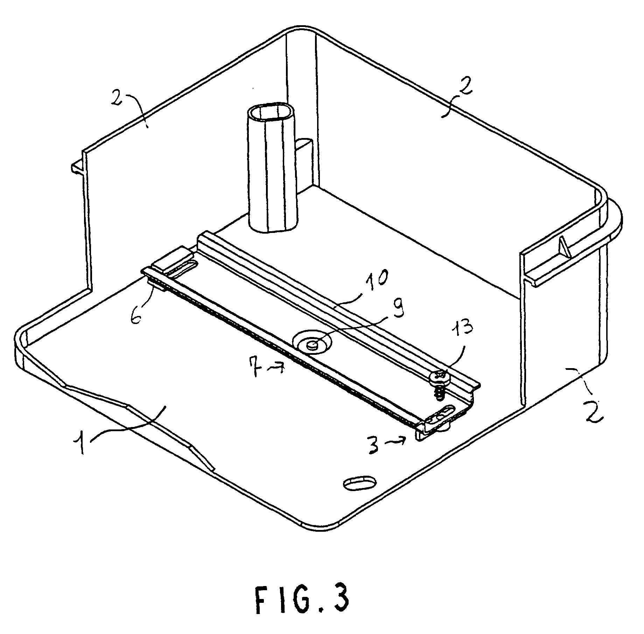

La figure 3 montre la mise en place du support 10 dans le coffret. Une première extrémité du support est glissée dans le second dispositif de fixation 6 en forme de glissière. La glissière maintient, à la première extrémité, une face du support dirigée vers le fond et une face du support dirigée vers la face avant du coffret. Le second dispositif 6 de fixation bloque le support dans ses déplacements perpendiculaires au fond 1.

La partie centrale du support est encastrée dans le troisième dispositif 7 de fixation. Le pion 7 traverse le perçage circulaire 12. Ce dispositif de fixation bloque les mouvements en translation parallèles au fond 1 et autorise la rotation du rail autour d'un axe perpendiculaire au fond matérialisé par le pion 7.

Le premier dispositif de fixation 3 permet d'immobiliser le support 10 dans toutes les directions. Une vis 13 traverse le perçage oblong d'une seconde extrémité du support. Le perçage oblong permet un réglage du positionnement, selon un plan parallèle au fond du coffret. Lorsque le positionnement est effectué, un simple serrage de la seule vis 13 permet d'immobiliser le support dans le coffret.

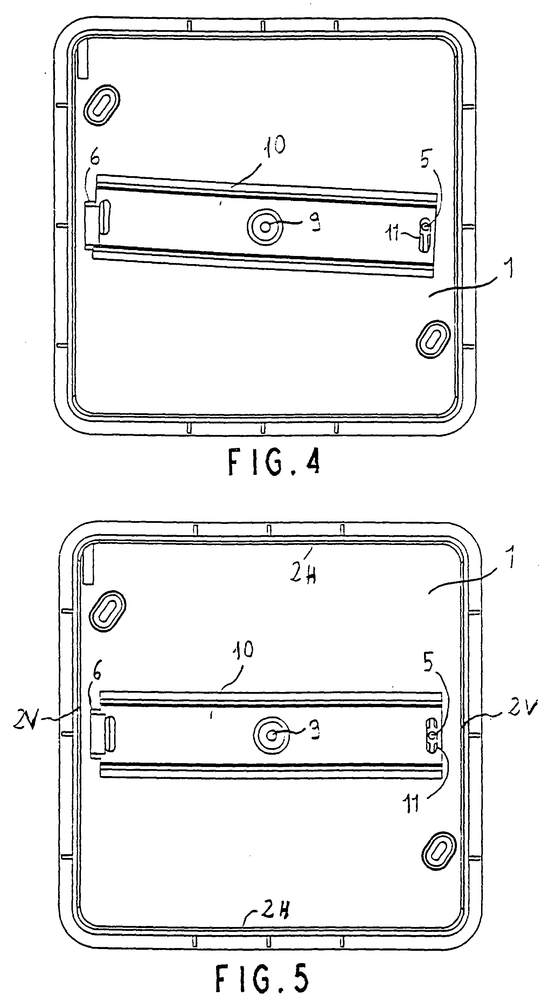

Les figures 4 et 5 montrent des vues du support 10 dans le coffret. Sur la figure 4 le support 10 est pivoté, autour du pion 9, dans une position maximale. L'orifice 5 apparaît au bord du perçage oblong 11.

Sur la figure 5, le support 10 est dans une position moyenne, l'axe longitudinal du rail servant de support est sensiblement perpendiculaire à des parois verticales 2V et parallèle à des parois horizontales 2H. L'orifice 5 apparaît sensiblement au milieu du perçage oblong 11.

Le coffret des figures 1 à 5 comporte un seul support, mais d'autres modes de réalisation, des coffrets selon l'invention peuvent comporter plusieurs supports.

Les trois dispositifs de fixation sont de préférence en matière plastique et moulés avec le fond 1 du coffret.

Dans le mode de réalisation décrit ci-dessus, le support est un rail symétrique mais d'autres formes de support sont possibles. Le support peut être en métal ou en matière plastique.

## Revendications

1. Coffret d'appareillage électrique comportant un fond (1), au moins un support (10) en forme de rail pour recevoir de l'appareillage électrique, et des moyens de maintien du support dans le fond du coffret comportant des premiers moyens (3, 4, 5) de fixation situés sur le fond sensiblement vers une première extrémité du support (10) pour immobiliser le support dans toutes les directions,
coffret **caractérisé en ce que** les moyens de maintien comportent :
- des seconds moyens (6) de fixation situés sur le fond sensiblement vers une seconde extrémité du support opposée à la première, lesdits seconds moyens enrobant une partie inférieure et une partie supérieure dudit support pour bloquer les déplacements perpendiculaires du support par rapport au fond (1) et permettre à la dite seconde extrémité de glisser, et
- des troisièmes moyens (7, 8, 9) de fixation solidaires du fond et comportant une partie de section étroite destinée à pénétrer dans le support, lesdits troisièmes moyens étant situés entre les premiers et des seconds moyens de fixation pour bloquer les mouvements en translation du support par rapport au fond et permettant des mouvements en rotation autour d'un axe (9) perpendiculaire audit fond.

2. Coffret d'appareillage électrique selon la revendication 1 **caractérisé en ce que** les premiers moyens (3) de fixation comportent une partie (4, 5) rehaussée solidaire du fond destinée à recevoir une vis (13) de fixation.

3. Coffret d'appareillage électrique selon l'une des revendications 1 et 2 caractérisé en ce les troisièmes moyens (7) de fixation sont solidaires du fond et ont une forme ayant une première partie (8) de section large entre le fond et le support et une seconde partie (9) de section étroite pénétrant dans le support.

4. Coffret d'appareillage électrique selon l'une quelconque des revendications 1 à 3 **caractérisé en ce que** les troisièmes moyens (7) de fixation sont situés à une distance sensiblement médiane entre les premiers (3) et les seconds (6) moyens de fixation.

5. Coffret d'appareillage électrique selon l'une quelconque des revendications 1 à 4 **caractérisé en ce que** les seconds moyens de fixation sont solidaires du fond et ont une forme de glissière enrobant une partie inférieure et une partie supérieure du support, la partie inférieure étant dirigée vers le fond du coffret et la partie supérieure dirigée vers la face avant du coffret.

6. Coffret d'appareillage électrique selon l'une quelconque des revendications 1 à 5 **caractérisé en ce que** le support comporte au moins à une extrémité un perçage (11) oblong perpendiculaire au fond du coffret et à une partie centrale un perçage (12) circulaire pour coopérer avec les troisièmes moyens (7, 8, 9) de fixation.

7. Coffret d'appareillage électrique selon l'une quelconque des revendications 1 à 5 **caractérisé en ce que** le support (10) est un rail symétrique.

## Patentansprüche

1. Installationskasten für elektrische Schaltgeräte mit einem Boden (1), mindestens einem als Schiene ausgebildeten Träger (10) zur Aufnahme von elektrischen Schaltgeräten sowie zur Befestigung des Trägers auf dem Boden des Installationskastens dienenden Haltemitteln, die im Bereich eines ersten Endes des Trägers (10) am Boden angeordnete erste Befestigungsmittel (3, 4, 5) zur Blockierung des Trägers in allen Richtungen umfassen,
**dadurch gekennzeichnet, daß** die Haltemittel
- im Bereich eines, dem ersten Ende gegenüberliegenden zweiten Endes des Trägers am Boden angeordnete zweite Befestigungsmittel (6), welche zweiten Befestigungsmittel eine Unterseite und eine Oberseite des genannten Trägers umgreifen, um Bewegungen des Trägers senkrecht zum Boden (1) zu verhindern und eine Gleitbewegung des genannten zweiten Endes zu ermöglichen, sowie
- dritte Befestigungsmittel (7, 8, 9) umfassen, die fest mit dem Boden verbunden sind und einen Abschnitt mit kleinem Querschnitt aufweisen, der dazu dient, in den Träger einzugreifen, welche dritten Mittel zwischen den ersten und den zweiten Befestigungsmitteln angeordnet sind, um geradlinige Bewegungen des Trägers in bezug zum Boden zu verhindern und Drehbewegungen um eine senkrecht zum Boden angeordnete Achse (9) zu ermöglichen.

2. Installationskasten für elektrische Schaltgeräte nach Anspruch 1, **dadurch gekennzeichnet, daß** die ersten Befestigungsmittel (3) einen erhöhten Teil (4, 5) umfassen, der fest mit dem Boden verbunden ist und zur Aufnahme einer Befestigungsschraube (13) dient.

3. Installationskasten für elektrische Schaltgeräte nach einem der Ansprüche 1 und 2, **dadurch gekennzeichnet, daß** die dritten Befestigungsmittel (7) fest mit dem Boden verbunden und so ausgebildet sind, daß sie einen zwischen dem Boden und dem Träger angeordneten ersten Abschnitt (8) mit großem Querschnitt sowie einen in den Träger eingreifenden zweiten Abschnitt (9) mit kleinem Querschnitt aufweisen.

4. Installationskasten für elektrische Schaltgeräte nach einem der Ansprüche 1 bis 3, **dadurch gekennzeichnet, daß** die dritten Befestigungsmittel (7) annähernd in halbem Abstand zwischen den ersten (3) und den zweiten (6) Befestigungsmitteln angeordnet sind.

5. Installationskasten für elektrische Schaltgeräte nach einem der Ansprüche 1 bis 4, **dadurch gekennzeichnet, daß** die zweiten Befestigungsmittel fest mit dem Boden verbunden und als Gleitnut ausgebildet sind, die eine Unterseite sowie eine Oberseite des Trägers umgreift, wobei die Unterseite dem Boden des Installationskastens und die Oberseite der Vorderseite des Installationskasten zugewandt sind.

6. Installationskasten für elektrische Schaltgeräte nach irgendeinem der Ansprüche 1 bis 5, **dadurch gekennzeichnet, daß** der Träger an mindestens einem Ende ein senkrecht zum Boden des Installationskastens eingebrachtes Langloch (11) sowie einen Mittelteil mit einer kreisrunden Bohrung (12) aufweist, die dazu dient, mit den dritten Befestigungsmitteln zusammenzuwirken (7, 8, 9).

7. Installationskasten für elektrische Schaltgeräte nach irgendeinem der Ansprüche 1 bis 5, **dadurch gekennzeichnet, daß** der Träger (10) als symmetrische Schiene ausgebildet ist.

## Claims

1. An electrical switchgear enclosure comprising a back plate (1), at least one support (10) in the form of a rail to receive electrical switchgear apparatuses, and means for securing the support in the back plate of the enclosure comprising first fixing means (3, 4, 5) situated on the back plate appreciably near a first end of the support (10) to immobilise the support in all directions,
an enclosure **characterized in that** the securing means comprise:
- second fixing means (6) situated on the back plate appreciably near a second end of the support opposite the first end, said second means covering a lower part and an upper part of said support to block the perpendicular movements of the support with respect to the back plate (1) and to enable said second end to slide, and
- third fixing means (7, 8, 9) fixedly secured to the back plate and comprising a part of narrow cross-section designed to enter the support, said third means being situated between the first and second fixing means to block the translation movements of the support with respect to the back plate and allowing rotational movements around an axis (9) perpendicular to said back plate.

2. The electrical switchgear enclosure according to claim 1 **characterized in that** the first fixing means (3) comprise a raised part (4, 5) fixedly secured to the back plate designed to receive a fixing screw (13).

3. The electrical switchgear enclosure according to one of the claims 1 and 2 **characterized in that** the third fixing means (7) are fixedly secured to the back plate and have a shape having a first part (8) of broad cross-section between the back plate and the support and a second part (9) of narrow cross-section entering the support.

4. The electrical switchgear enclosure according to any one of the claims 1 to 3 **characterized in that** the third fixing means (7) are located at a distance appreciably midway between the first fixing means (3) and the second fixing means (6).

5. The electrical switchgear enclosure according to any one of the claims 1 to 4 **characterized in that** the second fixing means are fixedly secured to the back plate and have the form of a slide covering a lower part and an upper part of the support, the lower part being directed towards the back plate of the enclosure and the upper part directed towards the front panel of the enclosure.

6. The electrical switchgear enclosure according to any one of the claims 1 to 5 **characterized in that** the support comprises at least at one end an oblong drilled hole (11) perpendicular to the back plate of the enclosure and in a central part a circular drilled hole (12) to co-operate with the third fixing means (7, 8, 9).

7. The electrical switchgear enclosure according to any one of the claims 1 to 5 **characterized in that** the support (10) is a symmetrical rail.
